# EUROPÄISCHE PATENTSCHRIFT

(11) **EP 0 536 490 B1**
(45) Veröffentlichungstag und Bekanntmachung des Hinweises auf die Patenterteilung: **10.05.1995**
(21) Anmeldenummer: 92112663.7
(22) Anmeldetag: 24.07.1992
(51) Int. Cl.: B60L 15/20, B62D 51/00

(54) **Gleichstromantrieb mit Anlasshilfe für Flurförderfahrzeuge, insbesondere Deichselfahrzeuge im Mitgehbetrieb**
DC drive with start-up support for an industrial truck, especially hand-controlled towbar vehicles
Entraînement à courant continu avec support de démarrage pour un chariot de manutention, notamment véhicules à timon conduits à la main

(30) Priorität: 08.10.1991 DE 4133303
(43) Veröffentlichungstag der Anmeldung: 14.04.1993
(73) Patentinhaber: Jungheinrich Aktiengesellschaft, 22047 Hamburg (DE)
(72) Erfinder: Oestmann, Harald, Dipl.-Ing., W-2000 Hamburg 65 (DE); Pfanne, Martin, Dipl.-Ing., W-2000 Hamburg 62 (DE)
(74) Vertreter: Patentanwälte Hauck, Graalfs, Wehnert, Döring, Siemons

(56) Entgegenhaltungen:
- EP-A- 0 371 226
- US-A- 4 287 959
- PATENT ABSTRACTS OF JAPAN vol. 10, no. 270 (M-517)(2326) 13. September 1986 & JP-A-61 094 504

## Beschreibung

Die Erfindung bezieht sich auf einen Gleichstromantrieb mit Anlaßhilfe für Flurförderfahrzeuge, insbesondere Deichselfahrzeuge im Mitgehbetrieb nach dem Oberbegriff des Patentanspruchs 1.

Bei Deichselfahrzeugen im Mitgehbetrieb befindet sich das Instrumentarium zur Betätigung des Antriebs, der Bremse und des Lastträgers üblicherweise an der Deichsel. Zu diesem Zweck ist der Deichsel ein Deichselschalter zugeordnet, der in der Ruhestellung der Deichsel ausgeschaltet ist, wodurch eine geeignete Bremse aktiviert wird. An der Deichsel befindet sich ferner ein Fahrschalter, mit dem die Drehrichtung des Antriebs und seine Geschwindigkeit vorgegeben wird. Es ist bekannt, die Steuerung des Gleichstromantriebs über Widerstände vorzunehmen. Widerstandssteuerungen haben jedoch einige Nachteile. So sind die Schütze durch Schalten unter Strom einem Verschleiß ausgesetzt. Außerdem sind nur relativ grobe Geschwindigkeitsstufen möglich, z.B. zwei bis drei Geschwindigkeitsstufen. Vorteilhafter sind dagegen Impulssteuerungen, die eine kontinuierliche Geschwindigkeitsregulierung erlauben. Sie erhöhen ferner die Standzeit der Schütze, da diese stromlos geschaltet werden können.

Bei einem Anfahren eines Deichselfahrzeugs hangaufwärts, insbesondere unter Last würde das Fahrzeug hangabwärts rollen, sobald die Bremse bei Deichselbetätigung gelöst wird und der Antriebsmotor kein ausreichendes Moment zur Verfügung stellt und eine hinter dem Fahrzeug stehende Bedienungsperson gefährden. Bei einer Widerstandssteuerung ermöglicht die erste Widerstandsstufe eine Motorspannung, die normalerweise einen ausreichend großen Strom liefert und damit ein ausreichendes Anlaßmoment, das ein Zurückrollen des Fahrzeugs verhindert. Bei einer Impulssteuerung hingegen findet beim Anlassen eine Hochlaufverzögerung statt, da der von dem Fahrschalter vorgegebene Sollwert über einen Integrator mit vorgegebener Zeitkonstante verzögert als Stellwert auf die zentrale Steuereinheit gegeben wird. Bei impulsgesteuertem Gleichstromantrieb besteht mithin die Gefahr, daß das Deichselfahrzeug am Hang zunächst zurückrollt, bevor ein ausreichendes Moment am Motor entwickelt wird. Durch das Abwärtsrollen des Fahrzeugs bei geschalteter Vorwärtsrichtung (Steigrichtung) wird außerdem der Gegenstrombremsbetrieb ausgelöst. Der Gegenstrombremsbetrieb aktiviert interne Strombegrenzungsregler die das Fahrzeug abfangen und es in den Steigbetrieb führen.

Der Erfindung liegt daher die Aufgabe zugrunde, einen impulsgesteuerten Gleichstromantrieb für Flurförderfahrzeuge, insbesondere Deichselfahrzeuge im Mitgehbetrieb zu schaffen, bei dem verhindert werden kann, daß das Fahrzeug beim Anfahren an einer Steigung zunächst hangabwärts rollt.

Diese Aufgabe wird gelöst durch die Merkmale des Patentanspruchs 1.

Die Erfindung geht von einer Impulssteuerung mit Hochlaufschaltung aus und sieht einen die Hochlaufschaltung umgehenden Anlaßstellwertgeber vor, der Bestandteil des Steuergerätes ist. Er kann willkürlich angesteuert werden, z.B. vom Deichselschalter und/oder Fahrschalter oder auch von einem getrennten von der Bedienungsperson zu betätigenden Schalter an der Deichsel. Alternativ kann auch ein Neigungsgeber am Fahrzeug vorgesehen werden, der bei entsprechender Hangstellung des Fahrzeugs ein Signal erzeugt, das in Verbindung mit der Betätigung des Fahrschalters dafür sorgt, daß der Anlaßstellwertgeber einen Anlaßstellwert für den Impulsstellwertgeber erzeugt, wenn das Fahrzeug hangaufwärts fahren soll. Es versteht sich, daß verhindert werden muß, daß das Fahrzeug in die entgegengesetzte Fahrtrichtung angetrieben wird. Mit dem Anlaßstellwertgeber wird die sonst übliche zeitliche Verzögerung beim Hochfahren des Motorstroms unterdrückt und ein Motorstrom geschaltet, der ein ausreichendes Moment im Gleichstrommotor erzeugt, das ein Zurückrollen des Deichselfahrzeugs verhindert.

Der Aufwand für eine derartige zusätzliche Sicherheitsmaßnahme wird naturgemäß verringert, wenn die Betätigung des Anlaßstellwertgebers mit den am Fahrzeug ohnehin vorhandenen Betätigungsorganen erfolgt. Hierzu sieht eine Ausgestaltung der Erfindung vor, daß der Anlaßstellwertgeber betätigt wird, wenn der Fahrtfreigabeschalter ausgeschaltet ist und der Fahrzeugschalter eine Fahrrichtung entgegen der Deichselrichtung angibt. Bei der herkömmlichen Impulssteuerung ist die Schaltung so ausgelegt, daß der Gleichstrommotor erst eingeschaltet wird, wenn der Freigabeschalter geschlossen wird, was gleichzeitig zum Lösen der Bremse führt. Es ist daher nicht möglich, durch Betätigung des Fahrschalters ein bestimmtes Moment bei "angezogener" Bremse aufzubauen. Bei der Erfindung wird zwar der Motorstrom ebenfalls nicht eingeschaltet, bevor der Freigabeschalter geschlossen wird, es wird jedoch ein interner Stellwert erzeugt, der bei der Einschaltung des Motors bereits einen ausreichend großen Strom zur Folge hat, der ein das Zurückrollen verhinderndes Anlaßmoment bereitstellt.

Um zu verhindern, daß unwillkürlich erzeugte Sollsignale (z.B. bei Störungen) ein Einschalten des Motors bewirken bzw. den Anlaßstellwertgeber in Betrieb setzen, sieht eine Ausgestaltung der Erfindung vor, daß der Anlaßstellwertgeber nur betätigt wird, wenn das Sollsignal einen vorgegebenen Mindestwert hat.

Zweckmäßigerweise wird bei dem erfindungsgemäßen Anlaßstellwertgeber ein Anlaßstellwert auf denjenigen Stellwert aufgeschaltet, der in herkömmlicher Weise von der Hochlaufschaltung erzeugt wird. Bliebe der Anlaßstellwertgeber weiterhin eingeschaltet, würde nach einer gewissen Hochlaufzeit der für den Impulsstellwertgeber erzeugte Stellwert eine Größe haben, die dem Sollwert nicht mehr entspricht. Es ist daher notwendig, den Anlaßstellwertgeber auszuschalten, wenn er nicht mehr benötigt wird. Hierzu sieht eine Ausgestaltung der Erfindung vor, daß ein Komparator vorgesehen ist, der das Sollsignal mit dem Stellwert vergleicht und ein Ausschaltsignal für den Anlaßstellwertgeber erzeugt, wenn das Sollsignal gleich oder kleiner als der Stellwert ist. In diesem Augenblick hat der Anlaßstellwertgeber seine Funktion erfüllt und kann automatisch stillgesetzt werden.

Es sind verschiedene Möglichkeiten denkbar, den Anlaßstellwertgeber zu realisieren. Eine besteht erfindungsgemäß darin, daß der Anlaßstellwertgeber einen Umschalter enthält, der wahlweise einen Stellwert Null oder einen Stellwert vorgegebener Größe auf den Impulsstellwertgeber schaltet, ein Schaltsignal über den Setzeingang eines Flip-Flops auf den Umschalter gegeben wird, wobei das Schaltsignal erzeugt wird, wenn der Freigabeschalter ausgeschaltet ist und der Fahrschalter eine Fahrtrichtung hangaufwärts vorgibt und auf den Rücksetzeingang des Flip-Flops ein Rücksetzsignal gegeben wird, wenn der Sollwert kleiner als der intere Stellwert ist und/oder der Fahrschalter in die entgegengesetzte Richtung betätigt wird.

Nach einer anderen Ausgestaltung der Erfindung ist eine mit den Fahrschaltersignalen beaufschlagte Richtungswechsel-Erkennungsschaltung vorgesehen, die bei einem Richtungswechsel ein Rücksetzsignal erzeugt. Nur wenn bei Betätigung des Freigabeschalters, z.B. des Deichselschalters, der Gleichstrommotor an die Gleichspannungsquelle geschaltet wird und der Fahrschalter noch die vorgegebene Auslenkung aufweist, bei der das Fahrzeug hangaufwärts, z.B. entgegengesetzt der Deichselrichtung fährt, wird der Anlaßstellwert auf den Impulsstellwertgeber gegeben. Wurde vorher der Fahrschalter in die entgegengesetzte Richtung ausgelenkt, bleibt der Anlaßstellwertgeber außer Funktion.

Falls es trotz der erfindungsgemäßen Maßnahme zu einem minimalen Zurückrollen eines Fahrzeugs kommt, sieht eine Ausgestaltung der Erfindung vor, daß der Anlaßstellwert auf eine zentrale Steuerschaltung gegeben wird zur Sperrung des Gegenstrombremsbetriebs. Dieser kann sich dann nicht negativ auf das Anfahrverhalten am Hang auswirken.

Nach einer weiteren Ausgestaltung der Erfindung wird der Ankerstrom überwacht und begrenzt, wenn er einen vorgegebenen Wert überschreitet.

Die Erfindung wird nachfolgend anhand von Zeichnungen näher erläutert.
- Fig. 1: zeigt ein Blockschaltbild für die Steuerung eines Gleichstromantriebs für Deichselfahrzeuge mit einer Anlaßhilfe nach der Erfindung.
- Fig. 2: zeigt ein Blockschaltbild eines Teils der zentralen Steuerschaltung nach Fig. 1.

Der Gleichstromantrieb für ein Deichselfahrzeug enthält einen Gleichstrommotor mit einem Anker 10 und einer dazu in Reihe schaltbaren Feldwicklung 12, deren Strombeaufschlagungsrichtung von einer Schaltergruppe 14 bestimmt ist, welche durch nicht gezeigte Richtungsschütze betätigt wird. Zwei Dioden 15, 16 enthaltende Freilaufpfade liegen parallel zur Reihenschaltung aus Anker 10 und Feldwicklung 12. Die Spannungsbeaufschlagung des Motors erfolgt mit Hilfe eines impulsgesteuerten Schalters oder PWM-Stellers 20 (PWM bedeutet Pulsweitenmodulation). Die Ansteuerung des PWM-Stellers 20 erfolgt über eine zentrale Steuerschaltung 22, die Steuerimpulse auf den PWM-Steller 20 gibt.

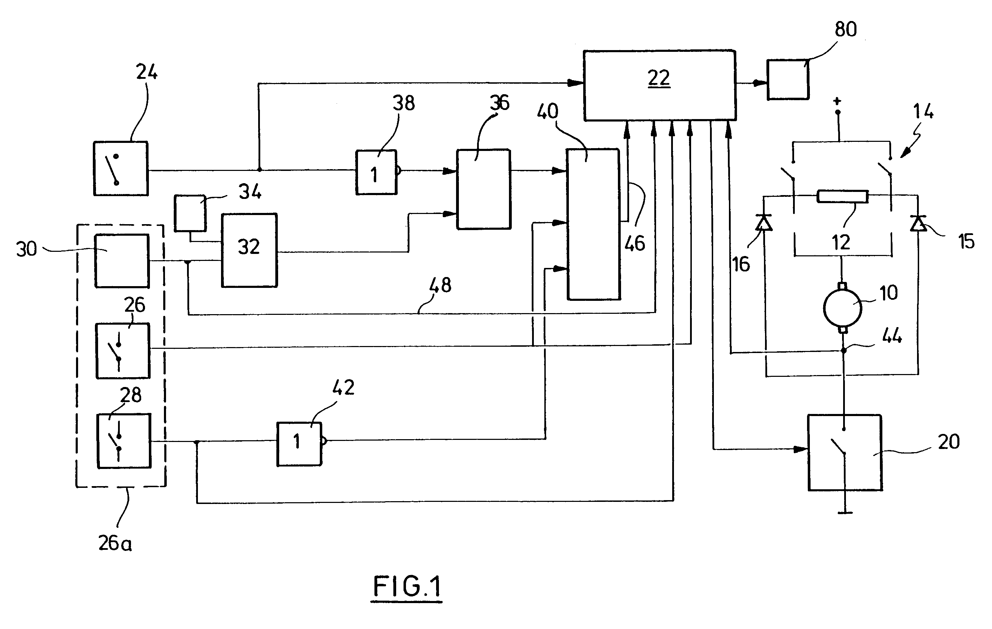

Mit der Deichsel des Fahrzeugs ist ein Deichselschalter 24 gekoppelt, der geöffnet ist, wenn sich die Deichsel in der Ruhestellung befindet. In dieser Stellung ist die Bremse des Fahrzeugs wirksam. An der Deichsel befindet sich außerdem ein Fahrschalter 26a, der in zwei entgegengesetzte Richtungen ausgelenkt werden kann, wobei die Auslenkrichtungen die Fahrrichtung des Fahrzeugs vorgeben. Die Richtungswahl geschieht beispielsweise mit Hilfe von Kontakten. Ein Schalter 26 zeigt etwa die Fahrt des Fahrzeugs in Gabelrichtung bzw. entgegengesetzt der Deichselrichtung an. Ein Schalter 28 zeigt die Fahrt in Deichselrichtung an. Das Ausmaß der Auslenkung bestimmt die Größe des Motorstroms und damit die Geschwindigkeit. Diese wird in Fig. 1 durch den Sollwertgeber 30 dargestellt. Dem Sollwertgeber ist ein erster Komparator 32 nachgeschaltet, dessen anderer Eingang mit einem Referenzgeber 34 verbunden ist. Der Referenzgeber 34 gibt z.B. einen Wert von 30 % des maximalen Sollwerts des Sollwertgebers 30 vor. Ein Ausgangssignal erscheint am Komparator 32 erst, wenn der Sollwert des Sollwertgebers 30 in diesem Fall mindestens 30 % des maximalen Sollwerts erreicht hat. Der Ausgang des Komparators wird auf ein UND-Glied 36 gegeben. Der andere Eingang erhält das Ausgangssignal des Deichselschalters 24 über einen Inverter 38. Das Ausgangssignal des Schalters 24 geht auch unmittelbar auf die zentrale Steuerschaltung 22.

Das Ausgangssignal des UND-Glieds 36 geht auf ein weiteres UND-Glied 40, dessen weitere Eingänge unmittelbar mit dem Ausgang des Schalters 26 bzw. über einen Inverter 42 mit dem Ausgang des Schalters 28 verbunden sind. Der Ausgang des UND-Glieds 40 geht auf die zentrale Steuerschaltung 22, die außerdem unmittelbar mit dem Sollwertgeber 30 (Fahrschalter) und den Ausgängen der Schalter 26, 28 verbunden ist. In der Leitung zum Anker 10 ist außerdem eine Strommeßvorrichtung 44 vorgesehen, deren Ausgangssignal auf die zentrale Steuerschaltung 22 geschaltet wird.

Es sei angenommen, daß die erwähnten Schalter eine logische Eins erzeugen, wenn sie betätigt sind. Das UND-Glied 36 erzeugt mithin einen Ausgang, wenn der Deichselschalter 24 geöffnet ist und der Komparator einen Ausgang führt, weil das Sollsignal des Sollwertgebers 30 mindestens 30 % des maximalen Sollwerts erreicht. Das UND-Glied 40 erzeugt ein Ausgangssignal, wenn der Schalter 26 geschlossen wird und der Schalter 28 geöffnet bleibt. Dadurch wird eine Anlaßhilfe initiiert.

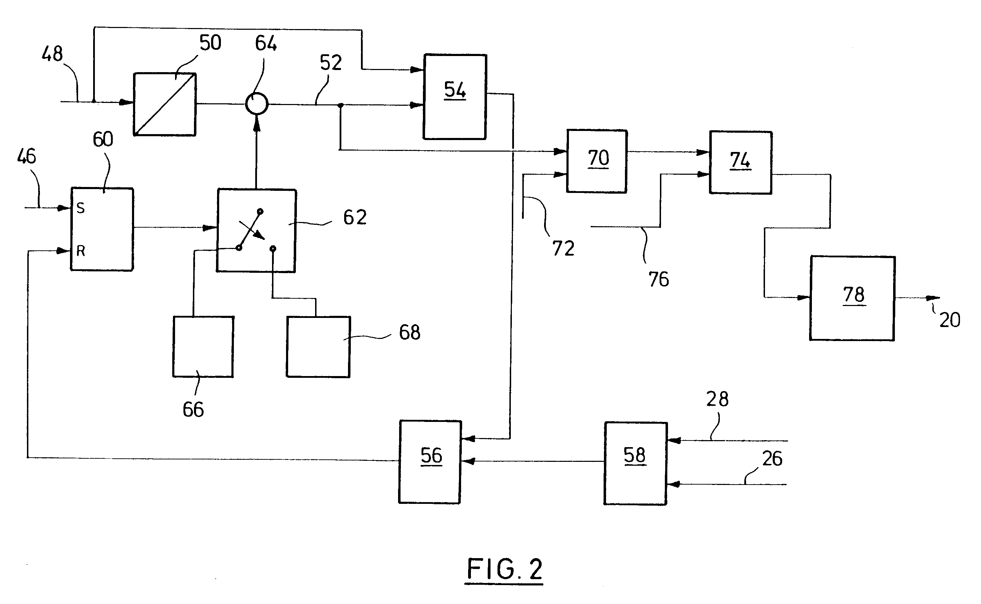

Die Verarbeitung des Ausgangssignals des UND-Glieds 40, das auf der Leitung 46 ansteht, wird anhand von Fig. 2 beschrieben. In Fig. 2 ist ein Integrator 50 zu erkennen, auf den der Sollwert des Sollwertgebers 30 über die Leitung 48 gegeben wird. Der Ausgang des Integrators 50 ist über eine Leitung 52 mit einem zweiten Komparator 54 verbunden, dessen anderer Eingang unmittelbar mit der Leitung 48 verbunden ist. Der Ausgang des Komparators 54 ist mit einem Eingang eines ODER-Gliedes 56 verbunden, dessen anderer Eingang mit dem Ausgang einer Richtungswechsel-Erkennungsschaltung 58 verbunden ist. Der eine Eingang der Erkennungsschaltung 58 erhält ein Signal vom Schalter 28 und der andere vom Schalter 26. Das Ausgangssignal des UND-Glieds 40 wird auf den Setzeingang eines Flip-Flops 60 gegeben, dessen Rücksetzeingang mit dem Ausgang des ODER-Glieds 56 verbunden ist. Der Ausgang des Flip-Flops ist mit einem Umschalter 62 verbunden, dessen einer Kontakt ständig mit einem Summierpunkt 64 in der Leitung zwischen Integrator 50 und Komparator 54 verbunden ist. Ein weiterer Kontakt des Umschalters 62 ist mit einem Geber 66 verbunden, der den Wert Null erzeugt. Ein dritter Kontakt des Umschalters 62 ist mit einem Geber 68 verbunden, der einen Anlaßstellwert erzeugt.

Der Ausgang des Integrators 50 ist mit einem Eingang eines Drehzahlreglers 70 verbunden, dessen anderer Eingang mit einem ersten Drehzahlgeber 72 verbunden ist. Der Ausgang des Drehzahlreglers 70 ist mit einem Stromregler 74 verbunden, dessen anderer Eingang den IST-Wert des Motorstroms über die Leitung 76 erhält. Der Ausgang des Stromreglers 74 ist mit dem Eingang eines Impulsstellwertgebers 78 verbunden, dessen Ausgang mit dem PWM-Steller 20 (Fig. 1) verbunden ist.

Wird das Flip-Flop 60 unter den oben beschriebenen Bedingungen gesetzt, verbindet der Umschalter 62 den Anlaßstellwertgeber 68 mit dem Summierpunkt 64, so daß der Drehzahlregler 70 einen deutlich von Null abweichenden Stellwert erhält, so daß der Gleichstrommotor über den PWM-Steller 20 mit ausreichendem Strom versorgt wird, um ein ausreichendes Anlaßdrehmoment zu erzeugen, sobald der Deichselschalter 24 geschlossen wird. Der Komparator 54 vergleicht ständig den vom Sollwertgeber 30 kommenden Sollwert mit dem Stellwert auf der Leitung 52, zu dem naturgemäß auch der vom Integrator 50 kommende Wert addiert wird. Erreicht der Stellwert einen Betrag der gleich oder größer ist als der Sollwert, wird das Flip-Flop 60 zurückgesetzt, und der Umschalter 62 schaltet den Anlaßstellwertgeber ab. Dieser wird auch abgestellt, wenn die Richtungswechsel-Erkennungsschaltung feststellt, daß der Fahrschalter in die entgegengesetzte Richtung ausgelenkt wurde.

Wenn über die Leitung 48 das Signal für die Anlaßhilfe auf die zentrale Steuerschaltung 22 gegeben wird, kann die Steuerschaltung gleichzeitig den Gegenstrombremsbetrieb unterbrechen, damit er keine negativen Auswirkungen auf das Anfahren des Fahrzeugs an der Steigung hat. Außerdem kann über ein Display 80 angezeigt werden, wenn die Anlaß-Hilfe eingeschaltet ist.

## Patentansprüche

1. Gleichstromantrieb mit Anlaßhilfe für Flurförderzeuge, insbesondere Deichselfahrzeuge im Mitgehbetrieb, mit einem Gleichstrommotor, einem impulsgesteuerten Schalter (20) für den Gleichstrommotor (10, 12), einen Fahrtfreigabeschalter (24) (z.B. Deichselschalter), der zwecks Lösens einer Bremse geschlossen wird, einem Fahrschalter (26a), dessen Betätigungsrichtung die Drehrichtung des Gleichstrommotors und dessen Auslenkung die Größe eines Sollwertsignals bestimmt, das über eine Hochlaufschaltung (50) als Stellwert auf einen Impulsstellwertgeber (78) gegeben wird, der die Steuerimpulse für den Schalter erzeugt, dadurch gekennzeichnet, daß ein die Hochlaufschaltung (50) umgehender Anlaßstellwertgeber (68) vorgesehen ist, der willkürlich vom Fahrtfreigabeschalter (24) und vom Fahrschalter (26a) und/oder einem getrennten Schalter oder automatisch von einem Neigungsgeber betätigt wird, wenn das Fahrzeug an einer Steigung anfahren soll, insbesondere entgegen der Deichselrichtung bei einem Deichselfahrzeug, und einen Anlaßstellwert für den Impulsstellwertgeber (28) erzeugt.

2. Gleichstromantrieb nach Anspruch 1, dadurch gekennzeichnet, daß der Anlaßstellwertgeber (62) betätigt wird, wenn der Freigabeschalter (24) ausgeschaltet ist und der Fahrschalter (26) eine Fahrt hangaufwärts vorgibt.

3. Gleichstromantrieb nach Anspruch 1 oder 2, dadurch gekennzeichnet, daß der Anlaßstellwertgeber (68) nur betätigt wird, wenn das Sollsignal einen vorgegebenen Mindestwert hat.

4. Gleichstromantrieb nach einem der Ansprüche 1 bis 3, dadurch gekennzeichnet, daß ein Komparator (54) vorgesehen ist, der das Sollsignal mit dem Stellwert vergleicht und ein Ausschaltsignal für den Anlaßstellwertgeber (68) erzeugt, wenn das Sollsignal gleich oder kleiner ist als der Stellwert.

5. Gleichstromantrieb nach einem der Ansprüche 1 bis 4, dadurch gekennzeichnet, daß der Anlaßstellwertgeber (68) einen Umschalter (62) enthält, der wahlweise einen Stellwert (66) Null oder einen Stellwert vorgegebener Größe auf den Impuls-Stellwertgeber (78) schaltet, ein Schaltsignal über den Setzeingang eines Flip-Flops (60) auf den Umschalter (62) gegeben wird, wobei das Schaltsignal erzeugt wird, wenn der Freigabeschalter (24) ausgeschaltet ist und der Fahrschalter (26a) eine Fahrt hangaufwärts (z.B. entgegen der Deichselrichtung) vorgibt und auf den Rücksetzeingang des Flip-Flops (60) ein Rücksetzsignal gegeben wird, wenn der Sollwert kleiner als der interne Stellwert ist und/oder der Fahrschalter (26a) in die entgegengesetzte Richtung betätigt wird.

6. Gleichstromantrieb nach Anspruch 5, dadurch gekennzeichnet, daß eine mit den Fahrsignalen beaufschlagbare Richtungswechsel-Erkennungsschaltung (58) vorgesehen ist, die bei einem Richtungswechsel ein Rücksetzsignal erzeugt.

7. Gleichstromantrieb nach einem der Ansprüche 1 bis 6, dadurch gekennzeichnet, daß der Anlaßstellwert auf eine zentrale Steuerschaltung (22) gegeben wird zur Sperrung des Gegenstrombremsbetriebs.

8. Gleichstromantrieb nach einem der Ansprüche 1 bis 7, dadurch gekennzeichnet, daß der vom Anlaßstellwert erzeugte Ankerstrom überwacht und begrenzt wird, wenn er einen vorgegebenen Wert überschreitet.

## Claims

1. A DC drive with start-up support for industrial trucks, in particular drawbar vehicles in the walking mode, comprising a DC motor, a pulse controlled circuit (20) for the DC motor (10, 12), a travel release switch (24) (e.g. drawbar switch) which is closed for disengaging a brake, a travel switch (25a) whose direction of displacement determines the direction of rotation of the DC motor and whose amount of displacement determines the value of a desired value signal which is fed via an acceleration circuit (50) to a pulse signal generator (78) for generating the control pulses for the switch, characterized in that there is provided a start-up signal generator (68) bypassing the acceleration circuit (50), which start-up signal generator is actuated arbitrarily by the travel release switch (24) and the travel switch (26a) and/or a separate switch or automatically by an inclination signal generator when the vehicle is to be started for up-hill travel, in particular in a direction opposite to the direction of the drawbar of a drawbar vehicle, and generates a start-up signal for the pulse signal generator (28).

2. A DC drive according to claim 1, characterized in that the start-up signal generator (62) is actuated when the release switch (24) is switched off and the travel switch (26) is set for up-hill travel.

3. A DC drive according to claim 1 or claim 2, characterized in that the start-up signal generator (68) is actuated only when the desired value signal is of a predetermined minimum value.

4. A DC drive according to any of claims 1 to 3, characterized in that there is provided a comparator (54) which compares said desired value signal with the actuating signal and generates a switch-off signal for the start-up signal generator (68) when the desired value signal is the same as or smaller than the actuating value.

5. A DC drive according to any of claims 1 to 4, characterized in that the start-up signal generator (68) includes a change-over switch (62) which selectively feeds an actuating signal (66) of zero or an actuating signal of a predetermined value to the pulse signal generator (78), a switch signal is fed via the set input of a flip-flop (60) to the change-over switch (62), the switch signal being generated when the release switch (24) is switched-off and the travel switch (26a) is set for up-hill travel (e.g. opposite to the direction of the drawbar) and a reset signal is provided to the reset input of the flip-flop (60) when the desired value is smaller than the internal actuating value and/or the travel switch (26a) is actuated in the opposite direction.

6. A DC drive according to claim 5, characterized in that there is provided a change of direction detection circuit (58) receiving the travel signals and generating a reset signal in response to a change of direction.

7. A DC drive according to any of claims 1 to 6, characterized in that the start-up value is fed to a central control circuit (22) for inhibiting the counter current brake operation.

8. A DC drive according to any of claims 1 to 7, characterized in that the armature current generated by the start-up actuating signal is monitored and will be limited when it exceeds a predetermined value.

## Revendications

1. Dispositif d'entraînement à courant continu pourvu d'un système auxiliaire de démarrage pour des chariots de manutention, notamment des véhicules à timon à déplacement accompagné, comportant :
un moteur à courant continu,
un interrupteur (20), commandé par des impulsions, pour le moteur à courant continu (10,12),
un interrupteur (24) d'autorisation de déplacement (par exemple un interrupteur de timon), que l'on ferme pour desserrer un frein,
un commutateur de marche (26a), dont le sens d'actionnement détermine le sens de rotation du moteur à courant continu et dont la position angulaire détermine la grandeur d'un signal de valeur de consigne qui est appliqué en tant que valeur de réglage, par l'intermédiaire d'un circuit de marche à régime élevé (50), à un générateur (78) de valeurs de réglage à impulsions, lequel produit les impulsions de commande pour le commutateur,
caractérisé en ce qu'il est prévu un générateur (68) de valeurs de réglage au démarrage, qui est monté en dérivation sur le circuit de marche à régime élevé (50) et est actionné à dessein par l'interrupteur d'autorisation de déplacement (24) et par le commutateur de marche (26a) et/ou un interrupteur séparé ou, de façon automatique, par un capteur d'inclinaison, lorsque le véhicule doit remonter une pente, notamment en sens opposé à la direction du timon dans le cas d'un véhicule à timon, et qui produit une valeur de réglage au démarrage pour le générateur (78) de valeurs de réglage à impulsions.

2. Dispositif d'entraînement à courant continu selon la revendication 1, caractérisé en ce que le générateur (62) de valeurs de réglage au démarrage est actionné lorsque l'interrupteur d'autorisation (24) est ouvert et que le commutateur de marche (26) commande un déplacement en montée.

3. Dispositif d'entraînement à courant continu selon la revendication 1 ou 2, caractérisé en ce que le générateur (68) de valeurs de réglage au démarrage est actionné uniquement lorsque le signal de consigne possède une valeur minimum prédéterminée.

4. Dispositif d'entraînement à courant continu selon l'une des revendications 1 à 3, caractérisé en ce qu'il est prévu un comparateur (54), qui compare le signal de consigne à la valeur de réglage et produit un signal d'interruption pour le générateur (68) de valeurs de réglage au démarrage, lorsque le signal de consigne est égal ou inférieur à la valeur de réglage.

5. Dispositif d'entraînement à courant continu selon l'une des revendications 1 à 4, caractérisé en ce que le générateur (68) de valeurs de réglage au démarrage contient un commutateur (62), qui applique au choix une valeur de réglage (66) zéro ou une valeur de réglage possédant une grandeur prédéterminée au générateur (78) de valeurs de réglage à impulsions;
qu'un signal de commutation est envoyé au commutateur (62) par l'intermédiaire de l'entrée de basculement d'une bascule bistable (60), le signal de commutation étant produit lorsque l'interrupteur d'autorisation (24) est ouvert et que le commutateur de marche (26a) commande un déplacement en montée (par exemple à l'opposé de la direction du timon);
et qu'un signal de remise à l'état initial, est appliqué à l'entrée de remise à l'état initial de la bascule bistable (60) lorsque la valeur de consigne est inférieure à la valeur de réglage interne et/ou que le commutateur de marche (26a) est actionné dans le sens opposé.

6. Dispositif d'entraînement à courant continu selon la revendication 5, caractérisé en ce qu'il est prévu un circuit (58) d'identification de changement de direction, qui peut être chargé par les signaux de marche et qui produit un signal de remise à l'état initial, dans le cas d'un changement de direction.

7. Dispositif d'entraînement à courant continu selon l'une des revendications 1 6, caractérisé en ce que la valeur de réglage au démarrage est envoyée à un circuit central de commande (22) pour le blocage du fonctionnement du freinage à récupération.

8. Dispositif d'entraînement à courant continu selon l'une des revendications 1 à 7, caractérisé en ce que le courant d'induit imposé par la valeur de réglage au démarrage est contrôlé et limité lorsqu'il dépasse une valeur prédéterminée.
